# EUROPÄISCHE PATENTSCHRIFT

(11) **EP 1 387 098 B1**
(45) Veröffentlichungstag und Bekanntmachung des Hinweises auf die Patenterteilung: **12.10.2011**
(21) Anmeldenummer: 03015417.3
(22) Anmeldetag: 09.07.2003
(51) Int. Cl.: F16C 33/40, F16C 29/06

(54) **Linearwälzlager**
Linear rolling bearing
Palier à roulement linéaire

(30) Priorität: 03.08.2002 DE 10235539
(43) Veröffentlichungstag der Anmeldung: 04.02.2004
(73) Patentinhaber: Schaeffler Technologies GmbH & Co. KG, 91074 Herzogenaurach (DE)
(72) Erfinder: Keller, Peter, 66892 Bruckmühlbach-Miesau (DE); Heipt, Peter, 66386 St. Ingbert (DE); Rudy, Dietmar, 66501 Kleinbundenbach (DE); Winkler, Thomas, 66280 Sulzbach/Saar (DE); Moseberg, Ralf, 66862 Kindsbach (DE); Heid, Michael, 66271 Kleinblittersdorf (DE)

(56) Entgegenhaltungen:
- EP-A- 0 845 611
- EP-A- 1 308 641
- DE-A1- 4 222 184
- GB-A- 1 520 704
- US-A- 3 292 981
- US-A- 4 352 526
- US-A1- 2003 185 470
- PATENT ABSTRACTS OF JAPAN Bd. 1999, Nr. 08, 30. Juni 1999 (1999-06-30) & JP 11 062995 A (NIPPON SEIKO KK), 5. März 1999 (1999-03-05)

## Beschreibung

Die Erfindung betrifft ein Linearwälzlager mit einer Führungsschiene und einem Führungswagen, welcher die Führungsschiene teilweise umgreift und an zwei Längsseiten der Führungsschiene über Wälzkörper verschiebbar abgestützt ist, wobei die Wälzkörper an jeder Längsseite in mindestens zwei parallelen, endlos umlaufenden Wälzkörperreihen angeordnet und jeweils von Distanzstücken geführt sind, welche sich in den Reihen zwischen den Wälzkörpern befinden.

Es sind bereits Linearwälzführungen bekannt, deren Wälzkörpersatz durch separate zusammenhängende Kettenglieder geführt wird. Diese umlaufenden Ketten sind als Zugketten ausgeführt. Bekannt ist auch aus mehreren Patentveröffentlichungen, dass eine solche Zugkette offen oder geschlossen ausgeführt sein kann. Des Weiteren gibt es bereits mehrere Patentanmeldungen, welche eine Zugkette nicht nur für eine Wälzkörperreihe, sondern auch als Doppelkammkette für zwei umlaufende Wälzkörperreihen beschreiben. Eine solche Ausführung ist in der Druckschrift EP 0 845 611 A1 offenbart. Diese zeigt ein Linearwälzlager der eingangs genannten Art, bei welchem an jeder Längsseite der Führungsschiene eine offene Kette als Führung für jeweils zwei endlos umlaufende Kugelreihen verwendet ist. Jede Kette weist in ihrem mittleren, zwischen den Wälzkörperreihen befindlichen Bereich einen flexiblen Verbindungsstreifen auf, an dessen beiden Längsseiten Distanzstücke in Abständen hintereinander angeordnet sind. In den Abständen befinden sich Wälzkörper, die hier als Kugeln ausgebildet sind. Damit ergibt sich mit dieser Ausführung eine doppelreihige Kugelkette. Diese hat jedoch den Nachteil, dass die einzelnen Kettenglieder leicht reißen können.

Aus der nachveröffenttichten EP 1 308 641 A1 ist ein Führungswagen für Profilschienenführungen bekannt geworden, bei dem in endlosen Kugelkanälen umlaufende Kugeln vorgesehen sind, wobei jeweils ein gemeinsames Distanzstück zwischen zwei hintereinander angeordneten Kugeln von beiden Reihen eingesetzt ist. Wenn der mit den Kugeln und den Distanzstücken bestückte Führungswagen auf die Führungsschiene aufgesetzt wird, kann es im Betrieb zu Problemen kommen, weil im ungünstigen Fall eines oder mehrere der Distanzstücke nicht einwandfrei eingefädelt wurde.

Der Erfindung liegt die Aufgabe zugrunde, ein Linearwälzlager zu schaffen, welches einen geräuscharmen Lauf und eine hohe Betriebssicherheit aufweist.

Diese Aufgabe wird durch Linearwälzlager gemäß der Ansprüche 1, 2, 6 und 7 gelöst.

Bei den erfindungsgemäßen Linearwälzlagern gemäß der Ansprüche 1 und 2 kann auf Ketten verzichtet werden, so dass der Nachteil des Zerreißens von Kettengliedern entfällt. Durch die erfindungsgemäßen, mit den Ausnehmungen versehenen Distanzstücke und den in diese Ausnehmungen eingreifenden, an dem Führungswagen befestigten Rückhaltesteg ist ein Herausfallen von Distanzstücken verhindert.

Bei den erfindungsgemäßen Linearwälzlagern gemäß der Ansprüche 6 und 7 ist die Montage der erfindungsgemäß miteinander verbundenen Distanzstücke vereinfacht, wobei durch die dünnen Verbindungsstege sichergestellt ist, dass nach wenigen Umläufen der Wälzkörperreihen die Verbindungsstege reißen, wodurch die Distanzstücke wieder vereinzelt sind.

Mit den erfindungsgemäßen Ausführungen ist eine höhere Zuverlässigkeit erzielbar. Da die verwendeten Distanzstücke als Doppelkammdistanzstücke wirken, welche von den Wälzkörpern und nicht, wie bei einer Zugkette, über separate, für Zuglaschen vorgesehen Kanäle geführt werden, entsteht weniger Reibung und ein geringerer dadurch bedingter Reibungsverlust. Da Zuglaschen bei der Erfindung nicht erforderlich sind, ist auch ein kleinerer Bauraum möglich.

Die Distanzstücke gemäß der Ansprüche 1 und 2 können in ihren Bereichen, welche sich zwischen den beiden parallelen Wälzkörperreihen befinden, jeweils mit einer V-förmigen Kerbe versehen sein, in welcher der an dem Führungswagen befestigte Rückhaltesteg eingreift, der einer Längsseite der Führungsschiene benachbart ist. Die von einem Distanzstück geführten Wälzkörper können jeweils auf einem größeren Teilbereich ihres kreisförmigen Umfanges von dem Werkstoff des Distanzstückes umschlossen sein.

Mehrere Distanzstücke sind gemäß der Ansprüche 6 und 7 als Kunststoffteile spritztechnisch im Verbund hergestellt, wobei jeweils an zwei benachbarten, hintereinander angeordneten Distanzstücken ein gemeinsamer, leicht zerreißbarer dünner Verbindungssteg angeformt ist. Eines oder mehrere der Distanzstücke können im Bereich der Wälzkörperschmiegung als Schmierstoffreservoir verwendbare Taschen aufweisen. Die Distanzstücke können auch aus einem porösen, Schmierstoff speichernden und kontinuierlich abgebenden Werkstoff hergestellt sein.

### Kurze Beschreibung der Zeichnung

Ausführungsbeispiele der Erfindung sind in der Zeichnung dargestellt und werden im folgenden näher beschrieben.

Es zeigen:
- Figur 1: ein erfindungsgemäßes Linearwälzlager in einer stimseiti- gen Ansicht mit teilweisem Querschnitt;
- Figur 2: das Linearwälzlager in einer Seitenansicht mit teilweisem Längsschnitt;
- Figur 3: ausschnittsweise zwei parallele Wälzkörperreihen mit zwei Distanzstücken in einem senkrechten Schnitt;
- Figur 4: eine Ansicht eines Distanzstückes in Richtung des Pfeiles IV der Figur 3;
- Figur 5: ausschnittsweise zwei parallele Wälzkörperreihen mit drei gegenüber Figur 3 abgewandelten Distanzstücken in ei- nem senkrechten Schnitt;
- Figur 6: die in Figur 5 obere Wälzkörperreihe mit den Distanzstü- cken in einem waagerechten Schnitt;
- Figur 7: die Wälzkörperreihen nach Figur 5 mit Distanzstücken, welche mit Schmierstofftaschen versehen sind.

### Ausführliche Beschreibung der Zeichnung

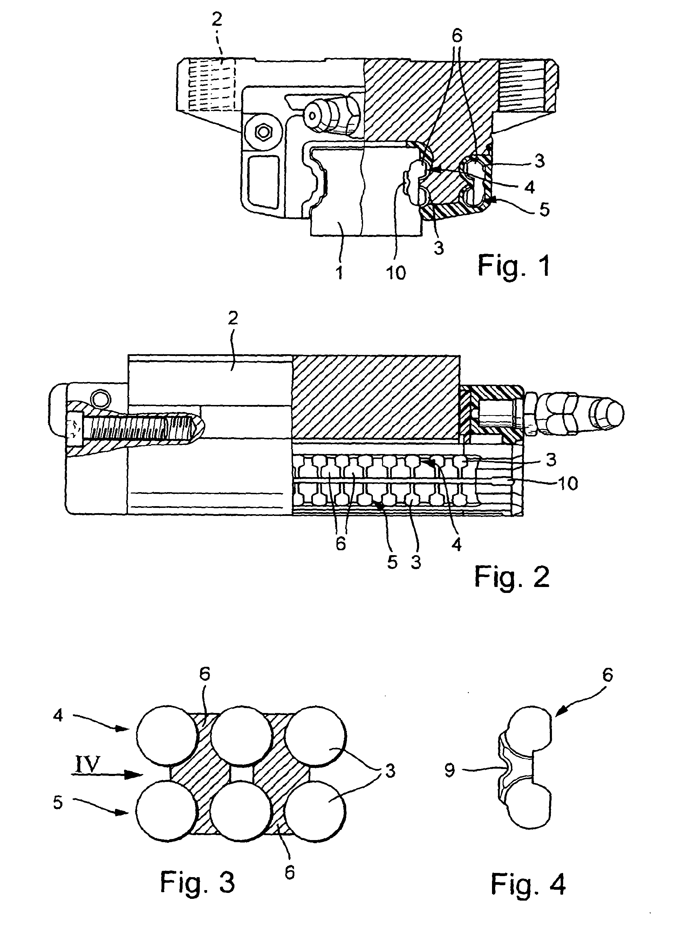

Die Figuren 1 bis 4 zeigen ein Führungssystem in der Front- und Seitenansicht. An einer Führungsschiene 1 ist ein Führungswagen 2 über Wälzkörper 3 längs verschieblich abgestützt. Der Führungswagen 2 enthält insgesamt vier umlaufende Wälzkörperreihen 4 und 5. Im Schnitt sind davon nur zwei Wälzkörperreihen 4 und 5 auf einer Seite dargestellt. Die Wälzkörperreihe 4 ist die obere Reihe, während die Wälzkörperreihe 5 die untere Reihe ist. Das in Figur 2 dargestellte System ist symmetrisch aufgebaut. Die in diesem Fall dargestellten Wälzkörper 3 sind als Kugeln ausgebildet. Denkbar ist auch jede andere geometrische Form der Wälzkörper, beispielsweise tonnenförmige Rollen oder Zylinderrollen. Die Führungsschiene 1, auf welcher der Führungswagen 2 in axialer Richtung verschiebbar ist, ist als Profilschiene ausgebildet. Die Verschiebung wird durch das Abwälzen der Wälzkörper 3 an der Führungsschiene 1 und dem Führungswagen 2 ermöglicht.

Bei der axialen Verschiebung laufen die Wälzkörper 3 im Führungswagen 2 um. Beim Verschieben des Führungswagens 2 könnten die Wälzkörper bei einer Ausführung ohne Distanzstücke gegeneinander schlagen und somit Geräusche verursachen. Zur Verhinderung einer solchen Geräuschbildung werden die Wälzkörper 3 durch Distanzstücke 6 voneinander getrennt. Jedes Distanzstück 6 ist so ausgeführt, dass es gleichzeitig zwei Wälzkörper 3 der oberen Reihe 4 und zwei Wälzkörper 3 der unteren Reihe 5 voneinander trennt. In den Figuren 3 und 4 ist ein solches Distanzstück dargestellt.

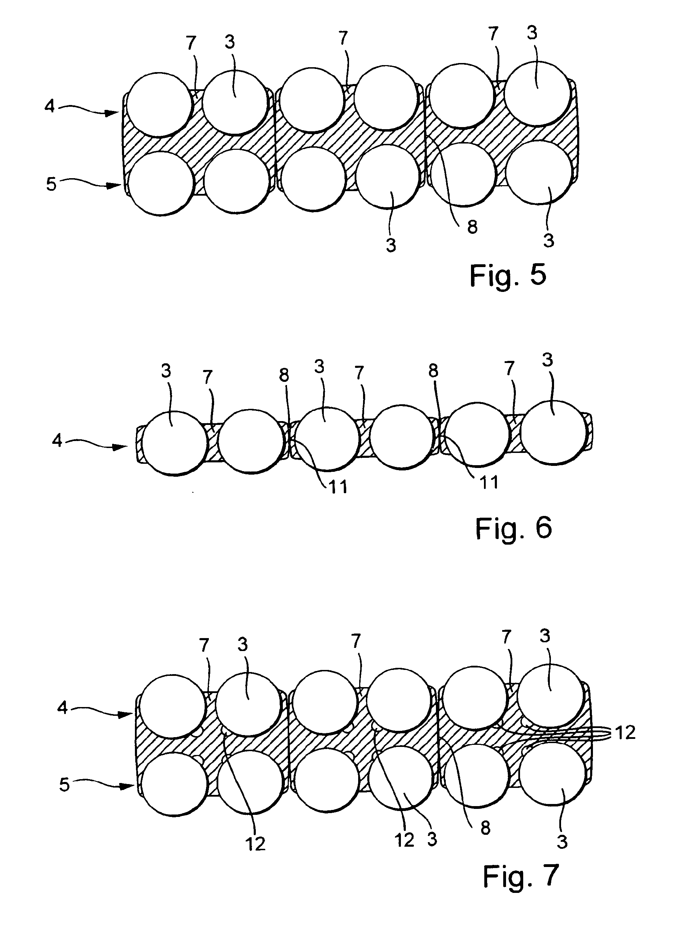

Eine weitere Ausführung eines Distanzstückes 7 zeigen die Figuren 5 bis 7. Hier werden jeweils zwei Wälzkörper 3 der oberen Reihe 4 mit zwei Wälzkörpern 3 der unteren Reihe 5 miteinander verbunden, so dass an dem Distanzstück 7 insgesamt vier Wälzkörper 3 angeordnet sind. Dieses Distanzstück 7 ist zudem so ausgeführt, dass die Wälzkörper 3 von ihm soweit umschlossen sind, dass sie daraus nicht herausfallen können. Mehrere Distanzstücke 7 sind hintereinander aufgereiht und berühren sich an ihren Berührungsflächen 8 gegenseitig, wie Figur 5 zeigt.

In der Seitenansicht der Distanzstücke 6 bzw. 7 gemäß Figur 4 ist eine V-förmige Kerbe erkennbar, die zur Rückhaltung der Distanzstücke und als zusätzliche Führungsnut für einen im Führungswagen 2 zusätzlich vorhandenen Rückhaltesteg 10 dient. Dieser ist in den Figuren 1 und 2 erkennbar. Gegenüber der in Figur 4 dargestellten Form der Kerbe 9 ist auch jede andere geometrische Ausbildung der Kernform denkbar. Der Rückhaltesteg 10 ist mit seinen beiden Enden mit den Stirnseiten des Führungswagens 2 verbunden. Er ist zwischen der Schiene 1 und den Distanzstücken 6 der Wälzkörperreihen 4 und 5 angeordnet.

Wird der Führungswagen 2 von der Führungsschiene 1 abgenommen, so wird ein Herausfallen der Distanzstücke 6 bzw. 7 und der Wälzkörper 3 aus dem Führungswagen 2 durch den Rückhaltesteg 10 verhindert. Die als Kugeln ausgebildeten Wälzkörper 3 werden von den Distanzstücken 6 und 7 umschlossen, so dass sie daraus nicht herausfallen können. Der Rückhaltesteg 10 kann aus Kunststoff, Draht oder einem beliebigen anderen geeigneten Werkstoff hergestellt sein.

Zur Vereinfachung der Montage können die Distanzstücke 7 spritztechnisch über einen dünnen Verbindungssteg 11 miteinander verbunden werden, wie es in Figur 6 dargestellt ist. Diese Verbindung soll jedoch so dünn ausführt werden, dass die Verbindungsstege 11 nach wenigen Umläufen der Wälzkörperreihen 4 und 5 reißen, wodurch die Distanzstücke 7 wieder vereinzelt werden.

Wie Figur 7 zeigt, können die Distanzstücke 7 im Bereich der Wälzkörperschmiegung zusätzlich mit Taschen 12 versehen sein, die als Schmierstoffreservoir wirken. Es ist auch denkbar, dass die Distanzstücke 7 aus einem porösen Material bestehen, welches Schmierstoff speichert und kontinuierlich an die Wälzkörper 3 abgibt.

Die mit der Erfindung erzielbaren Vorteile bestehen in Folgendem:
Die Distanzstücke werden von den Wälzkörpern geführt. Herkömmliche Zugketten benötigen einen separaten Führungskanal, in welchem Zugstege geführt werden; hierdurch steigt die Reibfläche und damit auch der Reibungswiderstand. Die Reibung der Ausführung mit Distanzstücken ist somit geringer.

Außerdem können herkömmliche Zugketten bei Verschmutzung und bei hohen Beschleunigungen zerreißen, was die Betriebssicherheit erheblich herabsetzt. Durch die Verwendung der Distanzstücke erhält das System eine erheblich höhere Betriebssicherheit bzw. Zuverlässigkeit.

Schließlich ist auch weniger Bauraum erforderlich, da Ketten- Zuglaschen entfallen.

### Bezugszahlenliste

- 1: Führungsschiene
- 2: Führungswagen
- 3: Wälzkörper
- 4: Wälzkörperreihe
- 5: Wälzkörperreihe
- 6: Distanzstück
- 7: Distanzstück
- 8: Berührungsfläche
- 9: Kerbe
- 10: Rückhaltesteg
- 11: Verbindungssteg
- 12: Tasche

## Patentansprüche

1. Linearwälzlager mit einer Führungsschiene (1) und einem Führungswagen (2), welcher die Führungsschiene (1) teilweise umgreift und an zwei Längsseiten der Führungsschiene (1) über Wälzkörper (3) verschiebbar abgestützt ist, wobei die Wälzkörper (3) an jeder Längsseite in mindestens zwei parallelen, endlos umlaufenden Wälzkörperreihen (4, 5) angeordnet sind und jeweils ein Distanzstück (6) zwischen zwei hintereinander befindlichen Wälzkörpern (3) einer Reihe (4, 5) eingesetzt ist, wobei an einer Längsseite der Führungsschiene (1) sowohl zwischen zwei benachbarten Wälzkörpern (3) der einen Reihe (4) als auch zwischen zwei benachbarten Wälzkörpern (3) der anderen Reihe (5) jeweils ein für beide Reihen (4, 5) gemeinsames Distanzstück (6) eingesetzt ist **dadurch gekennzeichnet, dass** die Distanzstücke (6, 7) in ihren Bereichen, welche sich zwischen den beiden parallelen Wälzkörperreihen (4, 5) befinden, jeweils mit einer Ausnehmung, insbesondere V-fömigen Kerbe (9) versehen sind, in weicher ein an dem Führungswagen (2) befestigter Rückhaltesteg (10) eingreift, der einer Längsseite der Führungsschiene (1) benachbart ist.

2. Linearwälzlager mit einer Führungsschiene (1) und einem Führungswagen (2), welcher die Führungsschiene (1) teilweise umgreift und an zwei Längsseiten der Führungsschiene (1) über Wälzkörper (3) verschiebbar abgestützt ist, wobei die Wälzkörper (3) an jeder Längsseite in mindestens zwei parallelen, endlos umlaufenden Wälzkörperreihen (4, 5) angeordnet und jeweils von Distanzstücken (7) geführt sind, welche sich in den Reihen (4, 5) zwischen den Wälzkörpern (3) befinden, **dadurch gekennzeichnet, dass** an einer Längsseite der Führungsschiene (1) sowohl zwei benachbarte Wälzkörper (3) der einen Reihe (4) als auch zwei benachbarte Wälzkörper (3) der anderen Reihe (5) jeweils in einem für beide Reihen (4, 5) gemeinsamen Distanzstück (7) geführt sind, wobei die Distanzstücke (6, 7) in ihren Bereichen, welche sich zwischen den beiden parallelen Wälzkörperreihen (4, 5) befinden, jeweils mit einer Ausnehmung, insbesondere V-fömigen Kerbe (9) versehen sind, in welcher ein an dem Führungswagen (2) befestigter Rückhaltesteg (10) eingreift, der einer Längsseite der Führungsschiene (1) benachbart ist.

3. Linearwälzlager nach Anspruch 2, **dadurch gekennzeichnet, dass** die von einem Distanzstück (7) geführten Wälzkörper (3) jeweils auf einem größeren Teilbereich ihres kreisförmigen Umfanges von dem Werkstoff des Distanzstückes (7) umschlossen sind.

4. Linearwälzlager nach Anspruch 2, **dadurch gekennzeichnet, dass** eines oder mehrere der Distanzstücke (7) im Bereich der Wälzkörperschmiegung als Schmierstoffreservoir verwendbare Taschen (12) aufweisen.

5. Linearwälzlager nach Anspruch 1 oder 2, **dadurch gekennzeichnet, dass** die Distanzstücke (6, 7) aus einem porösen, Schmierstoff speichernden und kontinuierlich abgebenden Werkstoff hergestellt sind.

6. Linearwälzlager mit einer Führungsschiene (1) und einem Führungswagen (2), welcher die Führungsschiene (1) teilweise umgreift und an zwei Längsseiten der Führungsschiene (1) über Wälzkörper (3) verschiebbar abgestützt ist, wobei die Wälzkörper (3) an jeder Längsseite in mindestens zwei parallelen, endlos umlaufenden Wälzkörperreihen (4, 5) angeordnet sind und jeweils ein Distanzstück (6) zwischen zwei hintereinander befindlichen Wälzkörpern (3) einer Reihe (4, 5) eingesetzt ist, wobei an einer Längsseite der Führungsschiene (1) sowohl zwischen zwei benachbarten Wälzkörpern (3) der einen Reihe (4) als auch zwischen zwei benachbarten Wälzkörpern (3) der anderen Reihe (5) jeweils ein für beide Reihen (4, 5) gemeinsames Distanzstück (6) eingesetzt ist, **dadurch gekennzeichnet, dass** mehrere Distanzstücke (7) als Kunststoffteile spritztechnisch im Verbund hergestellt sind, wobei jeweils an zwei benachbarten, hintereinander angeordneten Distanzstücken (7) ein gemeinsamer, leicht zerreißbarer dünner Verbindungssteg (11) angeformt ist.

7. Linearwälzlager mit einer Führungsschiene (1) und einem Führungswagen (2), welcher die Führungsschiene (1) teilweise umgreift und an zwei Längsseiten der Führungsschiene (1) über Wälzkörper (3) verschiebbar abgestützt ist, wobei die Wälzkörper (3) an jeder Längsseite in mindestens zwei parallelen, endlos umlaufenden Wälzkörperreihen (4, 5) angeordnet und jeweils von Distanzstücken (7) geführt sind, welche sich in den Reihen (4, 5) zwischen den Wälzkörpern (3) befinden, **dadurch gekennzeichnet, dass** an einer Längsseite der Führungsschiene (1) sowohl zwei benachbarte Wälzkörper (3) der einen Reihe (4) als auch zwei benachbarte Wälzkörper (3) der anderen Reihe (5) jeweils in einem für beide Reihen (4, 5) gemeinsamen Distanzstück (7) geführt sind, wobei mehrere Distanzstücke (7) als Kunststoffteile spritztechnisch im Verbund hergestellt sind, wobei jeweils an zwei benachbarten, hintereinander angeordneten Distanzstücken (7) ein gemeinsamer, leicht zerreißbarer dünner Verbindungssteg (11) angeformt ist.

## Claims

1. Linear rolling bearing having a guide rail (1) and having a guide carriage (2) which engages partially around the guide rail (1) and which is movably supported on two longitudinal sides of the guide rail (1) via rolling bodies (3), wherein the rolling bodies (3) on each longitudinal side are arranged in at least two parallel, endlessly circulating rolling body rows (4, 5), and in each case one spacer (6) is inserted between two successive rolling bodies (3) of a row (4, 5), wherein on one longitudinal side of the guide rail (1), in each case one spacer (6) which is common to both rows (4, 5) is inserted both between two adjacent rolling bodies (3) of one row (4) and also between two adjacent rolling bodies (3) of the other row (5), **characterized in that** the spacers (6, 7), in their regions which are situated between the two parallel rolling body rows (4, 5), are provided in each case with a recess, in particular V-shaped notch (9), in which engages a retaining web (10) which is fastened to the guide carriage (2) and which is adjacent to a longitudinal side of the guide rail (1).

2. Linear rolling bearing having a guide rail (1) and having a guide carriage (2) which engages partially around the guide rail (1) and which is movably supported on two longitudinal sides of the guide rail (1) via rolling bodies (3), wherein the rolling bodies (3) on each longitudinal side are arranged in at least two parallel, endlessly circulating rolling body rows (4, 5) and are guided in each case by spacers (7) which are situated in the rows (4, 5) between the rolling bodies (3), **characterized in that**, on one longitudinal side of the guide rail (1), both two adjacent rolling bodies (3) of one row (4) and also two adjacent rolling bodies (3) of the other row (5) are guided in each case in a spacer (7) which is common to both rows (4, 5), wherein the spacers (6, 7), in their regions which are situated between the two parallel rolling body rows (4, 5), are provided in each case with a recess, in particular V-shaped notch (9), in which engages a retaining web (10) which is fastened to the guide carriage (2) and which is adjacent to a longitudinal side of the guide rail (1).

3. Linear rolling bearing according to Claim 2, **characterized in that** the rolling bearings (3) which are guided by a spacer (7) are surrounded in each case over a relatively large part of their circular circumference by the material of the spacer (7).

4. Linear rolling bearing according to Claim 2, **characterized in that** one or more of the spacers (7) has/have, in the region of the rolling body osculation point, pockets (12) which can be used as lubricant reservoirs.

5. Linear rolling bearing according to Claim 1 or 2, **characterized in that** the spacers (6, 7) are produced from a porous material which stores and continuously releases lubricant.

6. Linear rolling bearing having a guide rail (1) and having a guide carriage (2) which engages partially around the guide rail (1) and which is movably supported on two longitudinal sides of the guide rail (1) via rolling bodies (3), wherein the rolling bodies (3) on each longitudinal side are arranged in at least two parallel, endlessly circulating rolling body rows (4, 5), and in each case one spacer (6) is inserted between two successive rolling bodies (3) of a row (4, 5), wherein on one longitudinal side of the guide rail (1), in each case one spacer (6) which is common to both rows (4, 5) is inserted both between two adjacent rolling bodies (3) of one row (4) and also between two adjacent rolling bodies (3) of the other row (5), **characterized in that** a plurality of spacers (7) are produced as plastic parts in combination by injection moulding, wherein a common, easily tearable, thin connecting web (11) is formed in each case on two adjacent, successive spacers (7).

7. Linear rolling bearing having a guide rail (1) and having a guide carriage (2) which engages partially around the guide rail (1) and which is movably supported on two longitudinal sides of the guide rail (1) via rolling bodies (3), wherein the rolling bodies (3) on each longitudinal side are arranged in at least two parallel, endlessly circulating rolling body rows (4, 5) and are guided in each case by spacers (7) which are situated in the rows (4, 5) between the rolling bodies (3), **characterized in that**, on one longitudinal side of the guide rail (1), both two adjacent rolling bodies (3) of one row (4) and also two adjacent rolling bodies (3) of the other row (5) are guided in each case in a spacer (7) which is common to both rows (4, 5), wherein a plurality of spacers (7) are produced as plastic parts in combination by injection moulding, wherein a common, easily tearable, thin connecting web (11) is formed in each case on two adjacent, successive spacers (7).

## Revendications

1. Palier à roulement linéaire, comprenant un rail de guidage (1) et un chariot de guidage (2), qui vient en prise en partie autour du rail de guidage (1) et qui est supporté de manière déplaçable sur deux côtés longitudinaux du rail de guidage (1) par le biais de corps de roulement (3), les corps de roulement (3) étant disposés sur chaque côté longitudinal dans au moins deux rangées parallèles (4, 5) de corps de roulement en mouvement sans fin, et un élément d'espacement (6) étant à chaque fois inséré entre deux corps de roulement (3) disposés l'un derrière l'autre dans une rangée (4, 5), un élément d'espacement (6) commun aux deux rangées (4, 5) étant inséré d'un côté longitudinal du rail de guidage (1) à la fois entre deux corps de roulement adjacents (3) d'une rangée (4) et entre deux corps de roulement adjacents (3) de l'autre rangée (5), **caractérisé en ce que** les éléments d'espacement (6, 7) sont pourvus, dans leurs régions qui se trouvent entre les deux rangées parallèles (4, 5) de corps de roulement, à chaque fois d'un évidement, en particulier d'une encoche en forme de V (9), dans laquelle s'engage une nervure de retenue (10) fixée sur le chariot de guidage (2), laquelle est adjacente à un côté longitudinal du rail de guidage (1).

2. Palier à roulement linéaire comprenant un rail de guidage (1) et un chariot de guidage (2), qui vient en prise en partie autour du rail de guidage (1) et qui est supporté de manière déplaçable sur deux côtés longitudinaux du rail de guidage (1) par le biais de corps de roulement (3), les corps de roulement (3) étant disposés sur chaque côté longitudinal dans au moins deux rangées parallèles (4, 5) de corps de roulement en mouvement sans fin, et étant guidés à chaque fois par des éléments d'espacement (7), qui se trouvent dans les rangées (4, 5) entre les corps de roulement (3), **caractérisé en ce que** sur un côté longitudinal du rail de guidage (1) sont guidés à chaque fois deux corps de roulement adjacents (3) d'une rangée (4) ainsi que deux corps de roulement adjacents (3) de l'autre rangée (5) à chaque fois dans un élément d'espacement (7) commun aux deux rangées (4, 5), les éléments d'espacement (6, 7) étant pourvus, dans leurs régions qui se trouvent entre les deux rangées parallèles (4, 5) de corps de roulement, à chaque fois d'un évidement, en particulier d'une encoche en forme de V (9), dans laquelle s'engage une nervure de retenue (10) fixée sur le chariot de guidage (2), laquelle est adjacente à un côté longitudinal du rail de guidage (1).

3. Palier à roulement linéaire selon la revendication 2, **caractérisé en ce que** les corps de roulement (3) guidés par un élément d'espacement (7) sont entourés à chaque fois sur une plus grande région partielle de leur périphérie circulaire par le matériau de l'élément d'espacement (7).

4. Palier à roulement linéaire selon la revendication 2, **caractérisé en ce qu'**un ou plusieurs des éléments d'espacement (7) présentent, dans la région de conformation des corps de roulement, des cavités (12) pouvant servir de réservoir de lubrifiant.

5. Palier à roulement linéaire selon la revendication 1 ou 2, **caractérisé en ce que** les éléments d'espacement (6, 7) sont fabriqués en un matériau poreux, stockant le lubrifiant, et le distribuant de manière continue.

6. Palier à roulement linéaire comprenant un rail de guidage (1) et un chariot de guidage (2), qui vient en prise en partie autour du rail de guidage (1) et qui est supporté de manière déplaçable sur deux côtés longitudinaux du rail de guidage (1) par le biais de corps de roulement (3), les corps de roulement (3) étant disposés sur chaque côté longitudinal dans au moins deux rangées parallèles (4, 5) de corps de roulement en mouvement sans fin, et un élément d'espacement (6) étant à chaque fois inséré entre deux corps de roulement (3) disposés l'un derrière l'autre dans une rangée (4, 5), un élément d'espacement (6) commun aux deux rangées (4, 5) étant inséré d'un côté longitudinal du rail de guidage (1) à la fois entre deux corps de roulement adjacents (3) d'une rangée (4) et entre deux corps de roulement adjacents (3) de l'autre rangée (5), **caractérisé en ce que** plusieurs éléments d'espacement (7) sont fabriqués par assemblage par une technique de pulvérisation sous forme de pièces en plastique, une nervure de connexion commune plus mince (11), facilement arrachable, étant façonnée à chaque fois sur deux éléments d'espacement (7) adjacents disposés l'un derrière l'autre.

7. Palier à roulement linéaire comprenant un rail de guidage (1) et un chariot de guidage (2), qui vient en prise en partie autour du rail de guidage (1) et qui est supporté de manière déplaçable sur deux côtés longitudinaux du rail de guidage (1) par le biais de corps de roulement (3), les corps de roulement (3) étant disposés sur chaque côté longitudinal dans au moins deux rangées parallèles (4, 5) de corps de roulement en mouvement sans fin, et étant guidés à chaque fois par des éléments d'espacement (7), qui se trouvent dans les rangées (4, 5) entre les corps de roulement (3), **caractérisé en ce que** sur un côté longitudinal du rail de guidage (1) sont guidés à chaque fois deux corps de roulement adjacents (3) d'une rangée (4) ainsi que deux corps de roulement adjacents (3) de l'autre rangée (5) à chaque fois dans un élément d'espacement (7) commun aux deux rangées (4, 5), plusieurs éléments d'espacement (7) étant fabriqués par assemblage par une technique de pulvérisation sous forme de pièces en plastique, une nervure de connexion commune plus mince (11), facilement arrachable, étant façonnée à chaque fois sur deux éléments d'espacement (7) adjacents disposés l'un derrière l'autre.
